Europäisches Patentamt

European Patent Office

Office européen des brevets

(11) Numéro de publication: **0 050 891**

· A1

# DEMANDE DE BREVET EUROPEEN

(21) Numéro de dépôt: **81201142.7**

(22) Date de dépôt: **15.10.81**

(51) Int. Cl.³: **F 03 D 11/02**
**F 03 D 9/02**

(30) Priorité: **23.10.80 BE 202567**
**28.10.80 BE 202618**
**14.11.80 BE 202811**
**19.06.81 BE 205166**

(43) Date de publication de la demande:
**05.05.82 Bulletin 82/18**

(84) Etats contractants désignés:
**AT CH DE FR GB IT LI LU NL SE**

(71) Demandeur: **Feraille, Amaury**
**Hoevenzavellaan, 54**
**B-3600 Genk, Waterschei(BE)**

(72) Inventeur: **Feraille, Amaury**
**Hoevenzavellaan, 54**
**B-3600 Genk, Waterschei(BE)**

(74) Mandataire: **Pirson, Jean et al,**
**c/o Bureau GEVERS SA 7 rue de Livourne Bte 1**
**B-1050 Brussels(BE)**

(54) **Moteur éolien.**

(57) Moteur éolien à tête mobile, comportant des moyens destinés à provoquer la rotation en sens inverse de deux axes concentriques (3-15) agissant, par l'intermédiaire de pignons coniques (16-18), sur un pignon conique intermédiaire commun (19) calé sur un arbre (20) à considérer comme arbre moteur et entraînant tout engin capable de transformer ou de délivrer une énergie tel qu'une génératrice de courant par exemple.

Fig. 1

EP 0 050 891 A1

Croydon Printing Company Ltd.

"Moteur éolien"

La présente invention est relative à un moteur éolien à tête mobile.

Elle concerne donc des installations éoliennes équipées d'une tête orientable au vent grâce, entre autres, à la présence d'un gouvernail d'orientation. La rotation d'une hélice orientable au vent tente à mettre en rotation autour de son axe vertical et par rapport au pylône sur lequel elle est montée, la tête orientable de l'éolienne. Ce phénomène est appelé "effet d'hélicoptère". Ledit "effet d'hélicoptère" se produit surtout lorsqu'on redresse la force motrice à la verticale c'est-à-dire lorsque l'effort de l'hélice dirigée au vent sur un arbre horizontal est transmis à un arbre vertical monté sur un pylône ou une construction analogue. L'effet en question prend des proportions considérables lorsque l'arbre horizontal est relié à l'arbre vertical par un renvoi d'angles à pignon denté.

L'invention a pour but, non seulement, de supprimer certains inconvénients, mais également de réaliser un moteur éolien complet. Ceci suppose l'amenée à la terre de l'énergie motrice, sans apparition dudit effet d'hélicoptère, la régularisation de la force motrice disponible et la présence de moyens de stockage, par accumulation massique d'énergie, de l'énergie produite.

A cet effet, le moteur éolien selon l'invention est caractérisé par des moyens destinés à provoquer la rotation en sens inverse de deux axes concentriques agissant, par l'intermédiaire de pignons coniques, sur un pignon conique intermédiaire commun calé sur un arbre, à considérer comme arbre moteur et entraînant tout engin capable de transformer ou de délivrer une énergie, tel qu'une génératrice de courant électrique, par exemple.

Dans une première forme de réalisation le moteur éolien selon l'invention comporte un arbre d'hélice entraînant en rotation un différentiel dont les arbres de sortie des planétaires entraînent chacun un arbre dans un sens de rotation opposé, le premier de ces arbres étant creux et solidaire d'un premier pignon conique et le second, monté à l'intérieur du premier, étant solidaire d'un second pignon conique coopérant avec un troisième pignon conique intermédiaire monté sur l'arbre d'entraînement de tout engin capable de transformer ou de délivrer une énergie, tel qu'une génératrice de courant électrique par exemple.

Selon cette forme de réalisation, le premier arbre de sortie du planétaire précité entraîne l'arbre creux précité par l'intermédiaire de pignons coniques.

Toujours selon cette forme de réalisation, le second arbre de sortie du planétaire précité entraîne un second arbre monté à l'intérieur de l'arbre creux précité, par l'intermédiaire de pignons coniques.

Avantageusement, l'arbre creux précité est monté à l'intérieur d'un cylindre traversant un plateau tournant supportant la tête orientable précitée.

Selon une forme de réalisation avantageuse, l'arbre creux précité est monté à l'intérieur d'un cylindre libre à doubles parois pour le passage de commandes.

Dans une variante, le moteur éolien selon l'invention comprend deux hélices pour agir sur deux pignons concentriques, le premier pignon entraînant un arbre creux à l'intérieur duquel est logé un second arbre entraîné en sens contraire par un second pignon, l'arbre creux et l'arbre logé à l'intérieur de celui-ci entraînant, chacun, un pignon intermédiaire commun monté sur l'arbre d'entraînement de l'engin précité, capable de transformer ou de délivrer une énergie, tel qu'une génératrice de courant électrique, les hélices destinées à entraîner en rotation les pignons concentriques précités étant montés en opposition pour provoquer la rotation en sens inverse desdits pignons concentriques.

Dans une forme d'exécution propre aux deux formes de réalisation précitées, la tête mobile précitée est solidaire d'un cylindre entourant l'arbre creux et, logée à l'intérieur de celui-ci.

Dans une variante, la transmission à partir d'un arbre horizontal portant une hélice vers un arbre moteur vertical se fait par l'intermédiaire de cardans.

Une particularité remarquable de l'invention réside dans le fait que le moteur éolien selon l'invention comporte un accumulateur massique d'énergie permettant d'agir sur la rotation de l'arbre d'entraînement, dit arbre moteur de l'engin précité, capable de transformer ou de délivrer une énergie, tel qu'une génératrice électrique par exemple.

Dans une forme de réalisation remarquable de l'invention, l'accumulateur massique d'énergie précité comporte, sur un arbre entraîné en rotation à partir des moyens précités, au moins un dispositif à cliquet destiné à assurer une rotation unilatérale de cet arbre, une boîte de vitesses et un différentiel dont l'un des arbres de sortie ou arbres moteurs entraîne l'engin précité, tandis que l'autre arbre de sortie entraîne , par interposition d'un engrenage démultiplié, un arbre sur lequel est calé au moins un tambour enrouleur pour soulever au moins un contrepoids.

D'autres détails et avantages de l'invention ressortiront de la description qui sera donnée ci-après d'un moteur éolien selon l'invention.

Cette description n'est donnée qu'à titre d'exemple et ne limite pas l'invention. Les notations de référence se rapportent aux figures ci-annexées.

La figure 1 est une vue schématique d'une partie de moteur éolien selon l'invention dans une première forme d'exécution.

La figure 2 est une vue schématique d'une partie du moteur éolien selon l'invention, dans une deuxième forme d'exécution.

La figure 3 est une vue schématique du moteur éolien selon l'invention, dans une troisième forme d'exécution.

La figure 4 est une vue schématique de certains éléments additionnels importants du moteur éolien selon l'invention et, entre autres, de l'accumulateur massique incorporé à celui-ci.

La figure 5 est une vue schématique d'une variante d'un accumulateur massique utilisable dans un moteur éolien selon l'invention.

Les figures 6 et 7 sont des vues, également schématiques, de variantes d'un accumulateur massique tel qu'il peut être utilisé dans un moteur éolien selon l'invention.

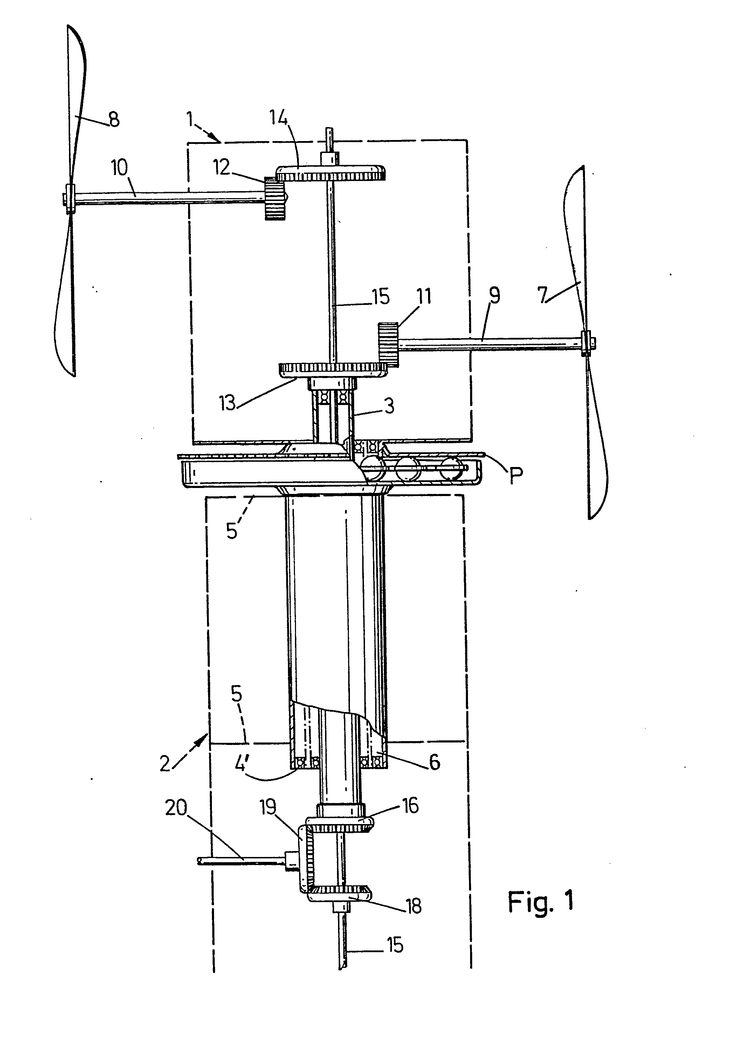

Le moteur éolien représenté par la figure 1 comporte une tête mobile 1 montée sur un pylône 2. La tête mobile 1 est montée fixe sur un plateau P. L'ensemble pivote autour de son axe géométrique par rapport au pylône 2. La tête mobile 1 est traversée par un cylindre 3 monté à cet effet dans des roulements 4. A l'extérieur du cylindre 3 est disposé un second cylindre 6 qui peut présenter une double paroi pour le passage de conduites ou de câblages de tout genre. Des roulements 4' sont également prévus entre ce dernier cylindre 6 et le premier cylindre 3.

Selon cette première forme d'exécution deux hélices 7 et 8, disposées en opposition et donc destinées à tourner en sens inverse, sont montées sur des axes respectifs 9 et 10 entraînant des pignons d'attaque 11 et 12. Les pignons 11 engrènent un premier pignon 13 fixé sur le cylindre 3 tandis que le pignon d'attaque 12 engrène un second pignon 14 qui est calé sur un arbre creux 15 équipé à sa base d'un pignon 16. Pour des raisons d'ordre constructif l'arbre 15 peut avoir un diamètre plus important et être creux afin de permettre le graissage de bas en haut de cet arbre. L'arbre 15 est concentrique à l'arbre 3 et occupe en réalité l'axe géométrique de celui-ci. L'arbre 15 traverse le centre du pignon conique 16 calé sur l'arbre creux 3, lui-même concentrique au cylindre 6 à doubles parois. Un pignon conique 18 est fixé sur l'arbre 15, en opposition avec le pignon 16 avec lequel il coopère par l'entremise d'un pignon intermédiaire 19 calé sur un arbre 20. On peut donc considérer les arbres 15 et 20 comme deux arbres moteurs. Un troisième arbre moteur peut être calé sur un pignon conique intermédiaire, non représenté, disposé en opposition avec le pignon conique 19.

De la description qui vient d'être donnée de cette première forme d'exécution, on remarquera que l'axe moteur 15 peut être considéré comme un arbre moteur destiné à tout usage, c'est-à-dire que par l'interposition d'un système multiplicateur, d'une boîte de vitesses ou d'un dispositif de freinage, il peut entraîner tout type d'engin capable de transformer ou de délivrer une énergie. Un tel engin peut, dans une forme d'exécution, par exemple, être constitué d'une génératrice de courant électrique, non représentée à la figure 1. Dans une construction selon cette forme de réalisation, l'effet d'hélicoptère auquel il a été fait allusion précédemment n'apparaît pas grâce à l'entraînement dans des sens opposés des arbres 15 et 3, entraînés respectivement par les pignons 14 et 13.

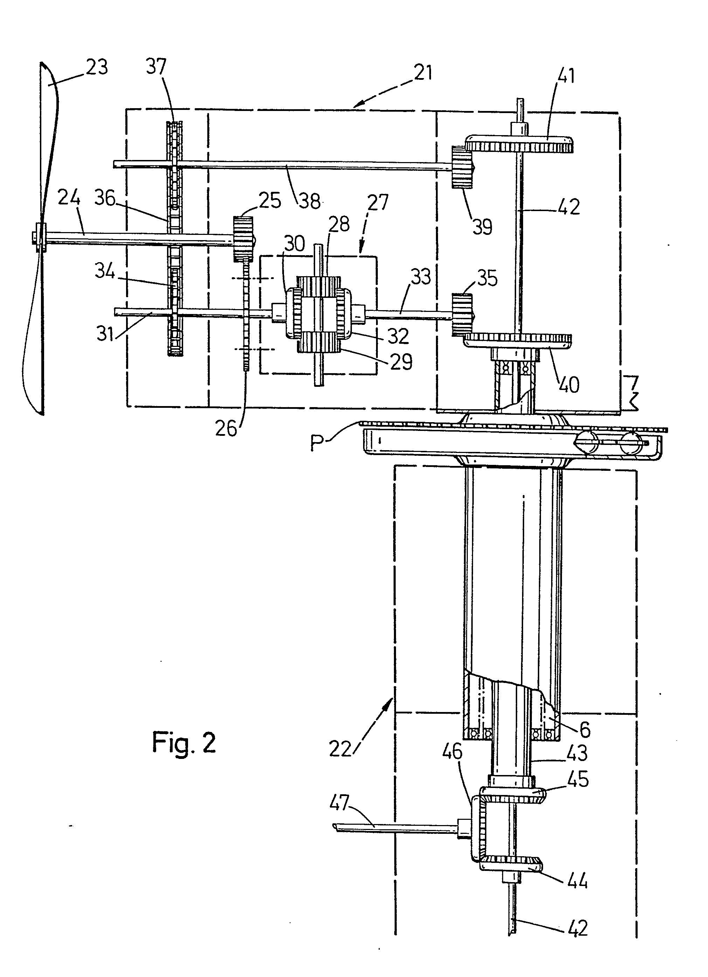

Dans la forme d'exécution selon la figure 2, comportant également une tête mobile 21, montée avec un plateau P par l'intermédiaire de roulements appropriés sur un pylône 22, le moteur fonctionne à partir d'une seule hélice 23 calée sur un arbre 24 entraînant un pignon 25 engrenant une roue dentée 26 agissant sur un différentiel représenté par la référence générale 27. Les satellites de ce différentiel sont représentés par les pignons coniques 28-29. Un satellite 30 est fixé sur un premier arbre de sortie 31 tandis que le satellite 32 est fixé sur un second arbre de sortie 33.

L'arbre de sortie 31 porte une roue à chaîne 34 et l'arbre de sortie 33 un pignon 35.

La roue à chaîne 34 transmet son mouvement de rotation par l'intermédiaire d'une chaîne Galle 36 à une roue à chaîne 37 fixée sur un axe 38 portant un pignon 39. Les pignons 35 et 39 engrènent respectivement des pignons 40 et 44 montés sur des arbres concentriques 42 et 43. La partie inférieure de l'arbre 42 entraîne un pignon conique 44 et un pignon conique 45 est calé sur l'arbre creux 43.

Le pignon conique intermédiaire commun 46 est calé sur un arbre 47 qui peut être considéré comme un premier arbre moteur, le second arbre moteur est constitué par la partie terminale inférieure de l'arbre 42. Un troisième arbre moteur peut être imaginé sur lequel serait calé un second pignon conique intermédiaire d'ailleurs non représenté et disposé en opposition avec le pignon conique 46.

8

Dans cette forme d'exécution l'effet d'hélicoptère est complètement absent grâce notamment à l'incorporation du différentiel 28 dans le système d'axe 31, 33, 38.

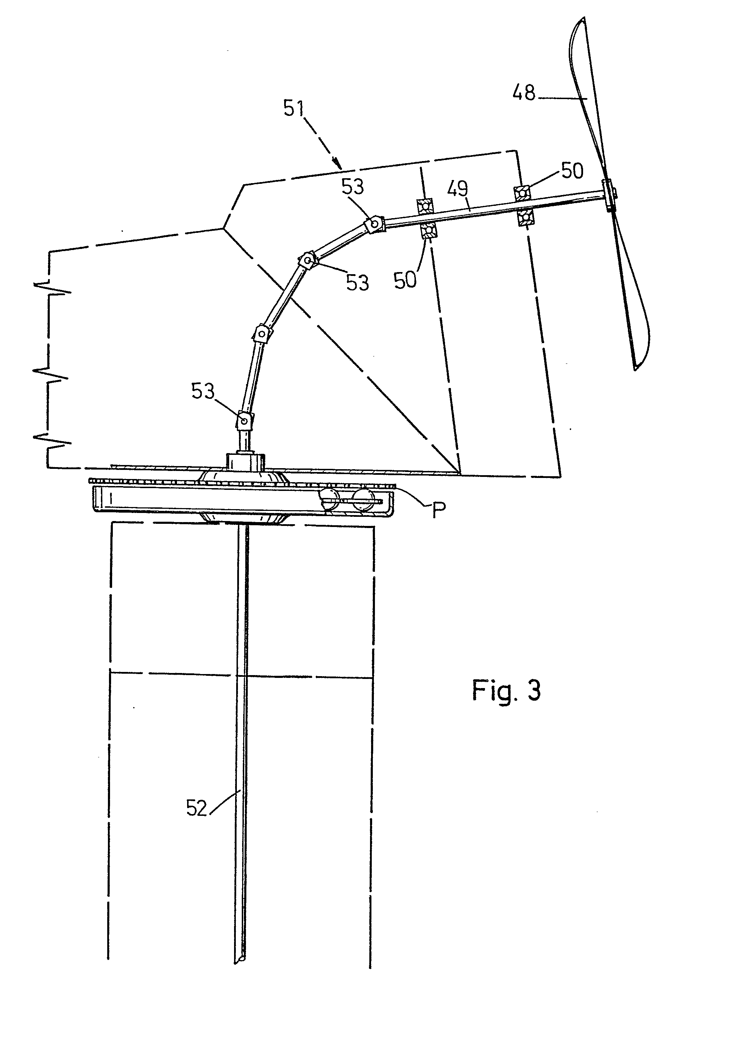

La figure 3 se rapporte à une forme d'exécution différente dans laquelle l'effet d'hélicoptère que pourrait provoquer la rotation de l'arbre moteur se trouve pratiquement supprimé en raison de la présence d'une transmission à cardan décrite ci-après.

Selon cette forme d'exécution, une hélice 48 entraîne en rotation un arbre 49 monté par des roulements à billes 50 sur une tête 51. La transmission de l'effort moteur à partir de l'arbre 49 vers l'arbre 52 est réalisée à l'aide d'un montage comportant une succession de cardans 53. Ce montage, qui assure , pratiquement sans perte d'énergie, l'effort transmis par l'arbre 49 à l'arbre moteur 52, ne provoque qu'un effet d'hélicoptère négligeable.

Les éléments du moteur éolien qui viennent d'être décrits en rapport avec les figures 1, 2 et 3 détaillées ci-dessus, concernent les mesures qui peuvent être prises pour supprimer ou atténuer dans une mesure largement suffisante le phénomène connu sous le nom d'effet d'hélicoptère tout en réalisant une ou plusieurs sorties correspondant à un ou plusieurs arbres moteurs capables d'entraîner une génératrice de courant électrique.

Comme il a déjà été dit plus haut, les arbres moteurs peuvent entraîner, en dehors d'une génératrice électrique tout engin capable de transformer ou de délivrer une énergie.

Pour que le moteur éolien selon la présente demande puisse être considéré comme une entité complète, il était également nécessaire de prévoir des moyens assurant l'entraînement régulier de la génératrice de courant électrique ou de l'engin auquel il a été fait allusion ainsi que l'actionnement de cette génératrice ou de cet engin lorsque le régime des vents est variable, tombe en dessous d'une valeur utile ou atteint une valeur nulle.

L'invention comprend donc également un dispositif à contrepoids dénommé accumulateur massique d'énergie ainsi qu'un régulateur mécanique électrique ou électronique de la vitesse d'actionnement de la génératrice ou de l'engin capable de transformer ou de délivrer une énergie. Le moteur éolien selon l'invention comporte également des moyens de liaison au secteur public lorsqu'aucune énergie n'est disponible.

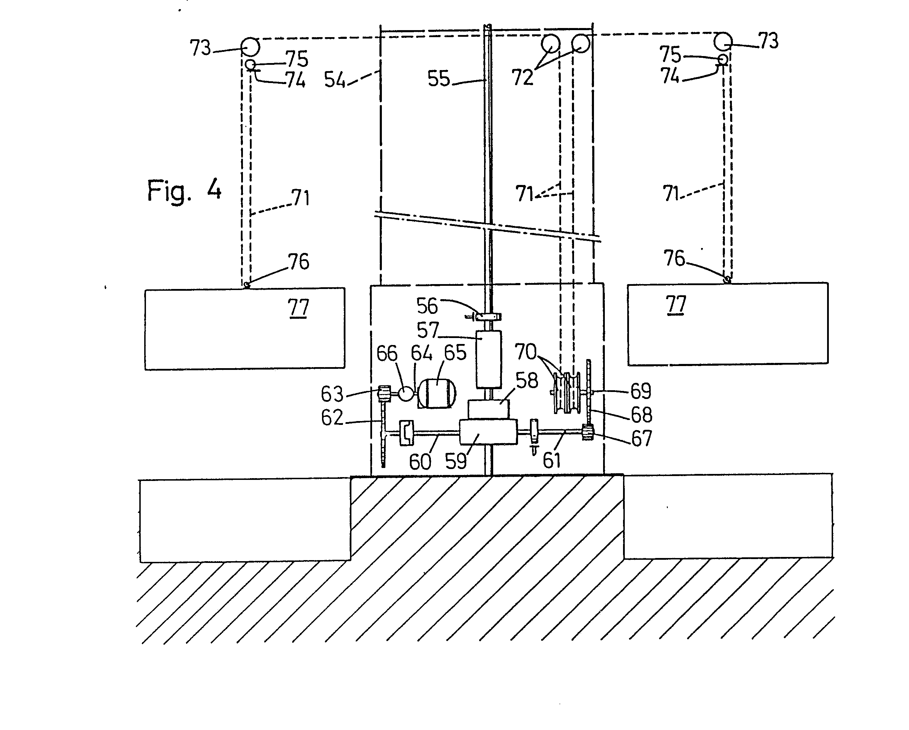

A la figure 4 on a représenté schématiquement un pylône 54 et un arbre moteur 55.

L'arbre moteur 55 est équipé d'un frein 56 et d'un dispositif schématisé par 57 pour assurer une rotation dans un sens de l'arbre moteur 55. Il peut s'agir en l'occurrence d'un dispositif de non-retour faisant usage d'un cliquet et d'une section d'arbre exécutée sous forme de vis d'Archimède coopérant de manière connue avec un pignon. La référence 58 désigne schématiquement une boîte de vitesses tandis qu'un différentiel est représenté très schématiquement sous la référence 59. Les sorties du différentiel sont constituées par les arbres désignés sous 60 et 61, l'arbre 60, à considérer comme l'arbre moteur, peut porter un engrenage démultiplicateur 62 engrenant un pignon 63 calé sur l'arbre 64 portant soit la génératrice de courant électrique 65, soit tout autre engin capable, comme il a été dit plus haut, de transformer ou de délivrer une énergie. A ladite génératrice ou à cet engin est associé un régulateur de vitesses désigné sous la référence 66.

L'autre sortie du différentiel, l'arbre 69, porte un dispositif de freinage manuel ou mécanique constituant un frein de sécurité de l'accumulateur massique. L'arbre 61 porte encore un pignon 67 engrenant un pignon 68 calé sur l'arbre 69 portant au moins un, mais de préférence deux ou plusieurs tambours 70 sur lesquels sont fixés des câbles 71 actionnant des poulies mouflées.

Le câble 71 passe sur des poulies 72 et 73. Les câbles 71, dont les extrémités sont équipées de moyens d'accrochage, tels que des crochets 74 pour des points fixes de l'installation désignés sous 75, passent également sur des poulies de renvoi 76 solidaires, chacune, d'un contrepoids 77.

Grâce à la présence d'un engrenage démultiplié 67-68 et en raison de la fonction du différentiel 59 dans l'installation, l'arbre moteur pourra, lors d'une baisse du régime éolien, laisser le contrepoids 77 ou les deux contrepoids 77 s'abaisser et fonctionner pendant un temps qui correspond au trajet de la masse ou des masses 77 sous l'influence de la gravité. Un frein manuel de sécurité est nécessaire pour bloquer si nécessaire toute l'accumulation massique d'énergie sur l'arbre 69.

Le frein 56 dont il a été question plus haut doit bloquer par un dispositif mécanique, électrique ou électronique, l'arbre moteur 55 lorsque l'accumulation massique est complète, c'est-à-dire lorsque les contrepoids ont été complètement relevés.

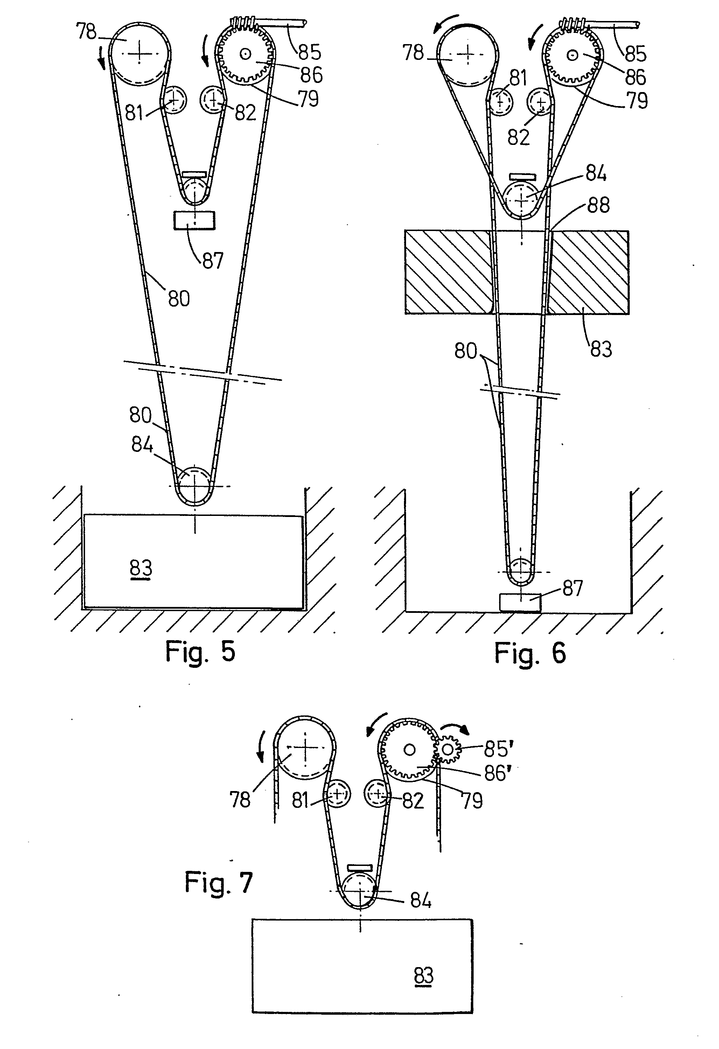

Les contrepoids 77 dont les trajets de va-et-vient ont été représentés à la figure 5 comme purement verticaux pourraient également, selon les possibilités et la nature du terrain être disposés sur des plans inclinés.

La figure 5 montre une variante du système d'accumulateur massique dans lequel il est fait usage de deux roues à chaînes 78 et 79 sur lesquelles passe une chaîne Galle 80 qui peut encore être guidée sur de petites roues à chaîne 81 et 82 ainsi que sur des éléments de guidage additionnels. Le contrepoids 83 est suspendu à la chaîne Galle par l'intermédiaire d'une poulie à chaîne 84 qui, elle, peut à son tour être mouflée.

L'arbre sur lequel est calée la roue à chaîne 78 peut être également équipé d'un dispositif anti-retour constitué, par exemple, par un cliquet ou par une section d'arbre en forme de vis d'Archimède 85 coopérant de manière connue en soi avec un pignon 86.

La figure 6 se rapporte à une forme d'exécution dans laquelle la chaîne Galle 80 équipée d'un petit contrepoids 87, comme d'ailleurs dans le cas de la forme d'exécution selon la figure 5, traverse un orifice central 88 du contrepoids 83.

A la figure 7 on remarque un montage différent du dispositif assurant une rotation, dans un sens, du mécanisme, la roue à chaîne 79 étant doublée d'un pignon 86' coopérant avec un pignon 85' couplé à un mécanisme de non-retour 85'.

L'invention n'est évidemment pas limitée aux formes d'exécution décrites ci-dessus et bien des modifications pourraient y être apportées sans sortir du cadre de la présente demande de brevet. C'est ainsi que les contrepoids de l'accumulateur massique peuvent être soulevés par des moyens hydrauliques ou pneumatiques sans altérer leur fonction essentielle.

D'un point de vue constructif, bien des modifications sont possibles, tant en ce qui concerne les parties statiques que les parties mobiles. Les têtes orientables 1, 21 ou 51, peuvent être rendues solidaires des plateaux tournants P par tout montage approprié.

REVENDICATIONS.

1. Moteur éolien à tête mobile (1), caractérisé par des moyens destinés à provoquer la rotation en sens inverse de deux axes concentriques (3-15 ou 42-43) agissant, par l'intermédiaire de pignons coniques (16-18 ou 44-45), sur un pignon conique intermédiaire commun ( 19 ou 46) calé sur un arbre (20-47) à considérer comme arbre moteur et entraînant tout engin capable de transformer ou de délivrer une énergie, tel qu'une génératrice de courant par exemple.

2. Moteur éolien selon la revendication 1, caractérisé en ce qu'il comprend un arbre d'hélice (24 ) entraînant en rotation un différentiel (27) dont les arbres de sortie et les planétaires entraînent chacun un arbre (43 ou 42) dans un sens de rotation opposé, le premier de ces arbres (43) étant creux et solidaire d'un premier pignon conique (45) et le second (42), monté à l'intérieur du premier, est solidaire d'un second pignon conique (44) coopérant avec un troisième pignon conique intermédiaire (46) monté sur un arbre (47) à considérer comme arbre moteur.

3. Moteur éolien selon la revendication 2, caractérisé en ce que le premier arbre de sortie (33) du planétaire précité entraîne l'arbre creux précité par l'intermédiaire d'un pignon conique.

4. Moteur éolien selon l'une quelconque des revendications 2 et 3, caractérisé en ce que le second arbre de sortie (31) du planétaire précité entraîne le second arbre monté à l'intérieur de l'arbre creux précité par l'intermédiaire de pignons coniques.

5. Moteur éolien selon la revendication 1, caractérisé en ce qu'il comporte deux hélices (7-8) pour agir sur deux pignons concentriques (13-14), le premier pignon (13) entraînant un arbre creux (3) à l'intérieur duquel est logé un second arbre (15) entraîné en sens inverse par un second pignon, l'arbre creux et l'arbre logé à l'intérieur de celui-ci entraînant chacun un pignon intermédiaire commun (19) monté sur l'arbre moteur (.20) destiné à l'entraînement d'un engin capable de transformer et de délivrer une énergie tel qu'une génératrice de courant électrique par exemple, les hélices précitées, destinées à entraîner en rotation les pignons concentriques précités, étant montées en opposition pour provoquer la rotation en sens inverse desdits pignons concentriques.

6. Moteur éolien selon l'une quelconque des revendications 2à5, caractérisé en ce que l'arbre creux précité (3) est monté à l'intérieur d'un cylindre libre à doubles parois (6).

7. Moteur éolien selon l'une quelconque des revendications 1à5 , caractérisé en ce que la tête mobile précitée (1) est montée fixe sur un plateau tournant (P), par l'intermédiaire duquel la tête mobile précitée (1) peut être orientée.

8. Moteur éolien selon l'une quelconque des revendications 1à 7, caractérisé en ce qu'il comporte un accumulateur massique d'énergie permettant d'agir sur la rotation de l'arbre d'entraînement d'un engin capable de transformer ou de délivrer une énergie,

tel qu'une génératrice de courant électrique par exemple, en particulier lorsque le régime éolien est insuffisant ou nul.

9. Moteur éolien selon la revendication 8, caractérisé en ce que l'accumulateur massique précité comporte, sur un arbre (55) entraîné en rotation à partir des moyens précités, au moins un dispositif (57) assurant une rotation en sens unique de cet arbre, une boîte de vitesses (58) et un différentiel (59) dont l'un des arbres de sortie entraîne un engin capable de transformer ou de délivrer une énergie, tel qu'une génératrice de courant électrique par exemple, tandis que l'autre entraîne, par l'interposition d'un engrenage démultiplié, un arbre sur lequel est calé au moins un tambour enrouleur pour soulever au moins un contrepoids.

10. Moteur éolien selon la revendication 8, caractérisé en ce que l'accumulateur massique précité comporte, sur un arbre entraîné en rotation à partir des moyens précités, au moins un dispositif assurant une rotation en sens unique de cet arbre, une boîte de vitesses et un différentiel dont l'un des arbres de sortie entraîne l'engin capable de transformer ou de délivrer une énergie pneumatique ou hydraulique destinée à soulever au moins un contrepoids.

11. Moteur éolien selon l'une quelconque des revendications 9 et 10, caractérisé en ce que des moyens agissant sur un frein de l'arbre précité sont associés à au moins un des contrepoids précités.

12. Moteur éolien à tête mobile, équipé d'une hélice calée sur un arbre horizontal ou pratiquement horizontal, caractérisé par une série de cardans transmettant la rotation de l'arbre horizontal précité à un arbre vertical ou sensiblement vertical afin de délivrer au sol l'énergie transmise par l'arbre d'hélice précité.

13. Moteur éolien selon la revendication 12, caractérisé en ce que la tête mobile précitée est montée sur un plateau tournant par l'intermédiaire duquel la tête mobile précitée peut être orientée.

Fig. 1

Fig. 2

Fig. 3

Fig. 4

5/5

0050891

Fig. 5

Fig. 6

Fig. 7

0050891

Numéro de la demande

EP 81 20 1142

**Office européen des brevets**

**RAPPORT DE RECHERCHE EUROPEENNE**

| Catégorie | Citation du document avec indication, en cas de besoin, des parties pertinentes | Revendication concernée |
|---|---|---|
| X | FR - A - 964 995 (SOMBARDIER)  <br><br> * page 2, lignes 64 à 99 *  <br><br> -- | 1,3,4 |
| X | FR - A - 988 861 (RATIE-ARSANDAUX)  <br><br> * page 2, ligne 2 à page 3, ligne 10; figures 3,5 *  <br><br> -- | 2,3,4 |
| X | FR - A - 1 074 780 (ROMANI)  <br><br> * page 2, colonne de droite, ligne 44 à page 3, colonne de droite, ligne 9 *  <br><br> -- | 5,7,13 |
| A | CH - A - 202 310 (STALDER)  <br><br> * page 1, colonne de gauche, ligne 21 à page 2, colonne de droite, ligne 28 *  <br><br> -- | 8,9,11 |
| A | FR - A - 377 859 (JANKUS-HITZ)  <br><br> * description en entier *  <br><br> -- | 8,9 |
| A | DE - B - 2 949 447 (VOITH)  <br><br> * colonne 3, ligne 40 à colonne 4, ligne 18 *  <br><br> ---------- | 12 |

## DOCUMENTS CONSIDERES COMME PERTINENTS

**CLASSEMENT DE LA DEMANDE (Int. Cl. 3)**

F 03 D 11/02
9/02

**DOMAINES TECHNIQUES RECHERCHES (Int. Cl. 3)**

F 03 D

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 29-01-1982 | DE WINTER |

OEB Form 1503.1   06.78